# EUROPEAN PATENT APPLICATION

(11) **EP 2 962 988 A1**
(43) Date of publication of application: **06.01.2016**
(21) Application number: 15169531.9
(22) Date of filing: 28.05.2015
(51) Int. Cl.: C01B 11/02, C01B 11/04

(54) **COMPOSITIONS, PREPARATION FOR PRODUCTION OF CHLORIDE DIOXIDE AND FINAL PRESENTATION FORMS**

(30) Priority: 30.06.2014 BR 102014016211
(71) Applicant: Beraca Sabara Quimicos e Ingredientes S/A, 53700-000 Itapissuma - PE (BR)
(72) Inventor: Aalves, Rafael Alexandre, 13451-159 Santa Barbara d´Oeste - SP (BR)
(74) Representative: Balder IP Law, S.L.

(57) **Abstract**

**"COMPOSITIONS, PREPARATION FOR PRODUCTION OF CHLORIDE DIOXIDE AND FINAL PRESENTATION FORMS", more** specifically, consists of the compositions and preparation for production of chloride dioxide with sundry purposes, more precisely a combination of balanced mixes of inorganic salts (citric acid + Sodium Chlorite and tartaric acid + sodium bicarbonate), proportionally balanced and packed individually or pressed in tablet form, produced through preparation or chemical route subdivided in 3 phases: (I) Partial acidification of the medium; (II) Formation of Hypochlorous Acid and (III) Formation of Chloride Dioxide, allows the resulting product, when diluted in water, the develop the necessary reactions and trigger the formation of Chloride Dioxide for use almost immediate, what is to say, in few minutes

## Description

### APLICATION FIELD

The present invention refers to compositions, preparation for production of chloride dioxide and final presentation forms for application of various areas, such as asepsis in industrial processes, food disinfection, water treatment for potability purposes, among other applications; this invention has as main innovation the development of packed product, ready for use, which chemical route allows the reaction for total formation of Chloride Dioxide to be basically immediate.

### TECHNIQUE FUNDAMENTALS

Chloride Dioxide (ClO₂) is a chemical compound with high oxidation and disinfection capacity, being much used in beverage and food industries, in tannery, in water treatment for public supply, sewage treatment plant, as well as industrial processes where high efficiency is required in the control and elimination of organic matter and deodorization, such as in power facilities, use of petrochemical, among other applications.

Chloride Dioxide (ClO2) is a yellow greenish synthetic gas at 100°C, which is 2.4 times heavier than air, Its production and the formation rate depends on the pH.

From pH 2 and 5 respectively it is formed from 70 to 85% of gas, and in high pH the formation rate is much lower. According to 'GANSTRON & LEE' (1958), mentioned by BITTON (1994), the process occurs through the following chemical reaction:

2 NaClO2 + Cl₂ ⇄ 2ClO₂ + 2 NaCl (equation A)

By being heated under pressure or under influence of UV rays it disintegrate and eventually explodes. Chloride dioxide becomes explosive from a concentration above 300 g/m³, but its behavior in aqueous solution can be stable for a much time under proper conditions such as the purity of the aqueous solution, the pH of the solution below 7, temperature below 250°C and the environment without the presence of light. If the conditions above are not observed there will be acceleration in its decomposition.

This decomposition first produces chlorate (ClO₃) and then chlorite (ClO₂) and can be shown through the following reactions:

2ClO₂ + H₂O ⇄ ClO₂⁻ + ClO⁻₃ + 2H⁺ (equation B)

The speed of this reaction increases based on the increase of pH.

The chlorite formed may continue disintegrating and forming chlorate, according to the reaction:

4 ClO₂⁻ + 2H⁺ ⇄ 2 ClO₂⁻ + ClO₃⁻ + 2 H₂O (equation C)

The speed of this reaction also increase, but based on the decrease of the pH rate.

Finally from the chloride dioxide result the chlorite and chlorate:

6 ClO₂⁻ + 2H⁺ ⇄ 2 ClO₂⁻ + ClO₃⁻ + 6H⁺ (equation D)

As the ClO₂ cannot be stored or transported in the form of concentrated gas or as aqueous solution, it should be produced only in the amount that will be consumed and in the application site.

Therefore, due to the unstable nature of gaseous chloride dioxide, it is difficult to produce a product in the form of compressed gas without it having explosive properties, in addition to the huge inconvenient of transportation and storage of chloride dioxide in the form of volatile liquid, not concentrated, thus limiting the use of chloride dioxide.

In order to overcome these difficulties, many companies have sought to develop chemical routes for production of solid formulation for chloride dioxide production, which not only eliminate the risk of explosion but also facilitate its use.

The product in the solid form for release of chloride dioxide gas under certain conditions can be presented in the form of paste, compressed or other solid forms that facilitate transportation and storage.

This type of preparation is usually prepared from the main raw material for stability of the native chloride dioxide solution or chloride of solid acid, organic or inorganic, and other acid substances such as acidifiers.

Despite the technological progress in relation to the preparation of solid products for production of chloride dioxide, there is still a technical hindrance in relation to the reaction time for total formation of Chloride Dioxide, as it is known that most of the current solid products need an average time of 2 hours from the moment the product is placed into water. The product developed by this invention adopts chemical routes that allow its use almost immediately, what is to say, in few minutes.

### TECHNIQUE STATUS ANALYSIS

For assessment of the state-of-art a survey was held in patents databases and in websites of products in the internet. In the search held in the subject - production of chloride dioxide - we found not documents using a chemical route that achieve the chloride dioxide reaction in minutes, as we propose.

The Brazilian publication No. PI 0108058-0 (Engelhard) refers to a massive pill or tablet that rapidly produces a chloride dioxide solution when immersed in water. By the expression "produced rapidly", it is understood that the total production of chloride dioxide is obtained in less than 8 hours, preferably in less than 2 hours and more preferably in less than 1 hour. The tablet consists of a source of chlorite anions as an alkaline-earth or alkaline metal chloride, preferably sodium chloride and one or more sources of dry solid acids. Examples of such dry solid acid sources include inorganic acid salts, such as sodium acid sulfate, potassium acid sulfate, sodium phosphate, potassium phosphate and potassium hydrogen phosphate; salts comprising the anions of strong acids and cations with weak bases, such as aluminum chloride, aluminum nitrate, ammonium ceric nitrate and iron sulphate; solid acids that can release protons in a solution when in contact with water, for instance, a mixture of acid with molecular form switched and sodium chloride; organic acids, such as citric acid and tartaric acid and their blends.

The Brazilian publication No. PI 0108058-0 (Globalex) refers to a product called "Oxitab" which consists of an effervescent Tablet for production of chloride dioxide belonging to the field of chemical products that generate chloride dioxide upon demand, what is to say, it produces only when necessary, not requiring any equipment for it, additional precursor chemicals or special formation for its production; the tablet consists of 19% to 29% of sodium chloride, 7% to 13% of magnesium sulfate, 2% to 4% of sodium percarbonate. 9% to 15% of sodium sulfate, 34% to 46% of sodium bisulfate. 3% to 7% of polyvinylpyrrolidone, 3% to 7% of sodium chloride and 0.5% to 15% of silica, in concentration of 1 ppm to 4 ppm. If used in Brazil, this product depends on imports and involves high cost, in addition to consisting of a chemical route different from what is proposed in this invention.

The Chinese document No. CN 102379309 (North China University) describes a set of two pills that when added to water react to obtain chloride dioxide. The pills A and B are packed separately, as follow:
- Pill A is prepared from a mixing and pressing of the following raw materials: 55 to 65 wt% of native agent, 12 wt% of dissolving agent, 11 wt% of foaming agent, 11 wt% of adhesion agent, 11 wt% of formation agent and 0.01 to 0.5% in weight of release agent; and
- Pill B is prepared from a mixing and pressing of the following raw materials: 35 to 50% of weight in acidifier agent, 20 to 30% in weight of catalyzer, 3 to 8 wt% of foaming agent, 10 to 15% in weight of adhesion agent, 10 to 15% in weight of formation agent and 0.05 to 0.2% in weight of release agent. When the reactive chlorine dioxide pill packed separately is used, the chlorine dioxide can be generated by adding the pill A and pill B in water, thus achieving the sterilization and disinfection effects.

In addition to national and international patents databases, we visited various webpages on the internet, such as websites of companies operating in the fertilizers processing area, as well as academic papers. No relevant paper was found anticipating the object, reason of this Patent Application.

### BRIEF DESCRIPTION OF THE OBJECT

Observing the state of the art of the technique and the need to eliminate the disadvantages of the processes currently used, whether for the complex chemical routes, whether for the long time for production of chloride dioxide from these routes, this invention was developed consisting of "preparation, compositions and packaging for chloride dioxide production" and that allows a product consisting of two packages, which contains on each of them a mixture of salts proportionally balanced, which when diluted in water together trigger the formation of a third product (product of interest) which is Chloride Dioxide.

The reactions occurring in the moment of Chloride Dioxide production for this product have effervescent aspect, but there is no release of heat or any other variable that may pose risk during its handling.

The reactional mechanism can be subdivided in 3 steps: (I) Partial acidification of the medium; (II) Formation of Hypochlorous Acid; (III) Formation of Chloride Dioxide. At the end of these steps we have a concentrated solution of Chloride Dioxide with pH between 6.0 and 7.5.

The product obtained features as advantages easy handling, pH of final product, easy logistics, increased number of users, since this technology do not require equipment or more complex facilities for its production.

### DETAILED DESCRIPTION OF THE INVENTION

With regard to the drawings, this invention refers to "COMPOSITIONS, PREPARATION FOR PRODUCTION OF CHLORIDE DIOXIDE AND FORMS OF FINAL PRESENTATION", more particularly the preparation is based in a chemical route that allows the combined use of inorganic salt mixtures (citric acid + Sodium Chloride and tartaric acid + sodium bicarbonate), proportionally balanced that when diluted in water together trigger the formation of Chloride Dioxide for use almost immediate, what is to say, in few minutes.

The preparation is fast, with lower cost than conventional methods and reliable for production and use of Chloride Dioxide. It follows the following chemical route subdivided in 3 phases:
- Partial acidification of the medium;
- Formation of Hypochlorous Acid
- Formation of Chloride Dioxide

### Acidification Phase:

- The two salt mixtures when placed into water initially promote partial acidification of the medium by the formation of Carbonic Acid, which rapidly releases ions to the medium H⁺ and CO2⁻, the latter rapidly detaches from the liquid mass, causing the effervescence aspect:

   C₆H₈O₇.H₂O + 3NaHCO₃ - > 4 H₂O + Na₃C₆H₅O₇ + 3CO₂ (equation 1)

   C₄H₆O₆ + 2NaHCO₃ - > 2H₂O + Na₂C₄H₆O₆ + 2CO₂ (equation 2)

### Hypochlorous Acid Formation Phase:

Another reaction occurs concurrently to that above mentioned, where Hypochlorous Acid is produced, as shown below, which will be consumed later in the formation of Chloride Dioxide:

- 6 C₃O₃N₃NaCl₂ + 2 H₂O - > C₃O₃N₃NaH₂ + 2 HClO (equation 3)

### Hypochlorous Acid Stabilization Phase:

- With greater availability of ions H⁺ in the medium the reaction displaces towards the formation of Hypochlorous Acid. The Ions H⁺ present in the medium help to keep the hypochlorous acid in its non-detached form, contributing to increase overall yield of the process and maximizing the formation of Chloride Dioxide:

   HClO - > H⁺ + ClO⁻ (equation 4)

### Chloride Dioxide Formation Phase

- With the Hypochlorous Acid present in non-detached form, the reaction of chloride Dioxide formation happens spontaneously. In this reaction there is formation of Sodium Hydroxide, which will contribute for the final pH adjustment of the Chloride Dioxide solution:

   2 NaClO₂ + HOCI = 2ClO₂ + NaCl + NaOH (equation 5)

The product can be offered in two ways:
1^{st} product option: Two packages, where each contains one mixture of salts (citric acid + sodium hypochlorite and tartaric acid + sodium bicarbonate), proportionally balanced, which when diluted in water together develop the reactions necessary in effervescent aspect and trigger the formation of Chloride Dioxide.
2^{nd} product option: both salt mixes are pressed in (effervescent) tablet that when diluted in water trigger the formation of Chloride Dioxide.

For sure, when this invention is placed into practice, changes can be introduced in regard to certain details of construction and form, without deviating from the key principles that are clearly founded in the claim, thus being understood that the terminology used aimed at non-limitation.

## Claims

1. **"COMPOSITIONS, PREPARATION FOR PRODUCTION OF CHLORIDE DIOXIDE AND FINAL PRESENTATION FORMS",** more specifically, compositions and preparation for production of chloride dioxide with sundry purposes, more precisely characterized for consisting of a combination of balanced mixes of inorganic salts (citric acid + Sodium Chlorite and tartaric acid + sodium bicarbonate), proportionally balanced and packed individually or pressed in tablet form, produced through preparation or chemical route subdivided in 3 phases: (I) Partial acidification of the medium; (II) Formation of Hypochlorous Acid and (III) Formation of Chloride Dioxide, allows the resulting product, when diluted in water, the develop the necessary reactions and trigger the formation of Chloride Dioxide for use almost immediate, what is to say, in few minutes.

2. **"PREPARATION FOR PRODUCTION OF CHLORIDE DIOXIDE",** according to claim 1, ***characterized* by** the preparation or chemical route following the phases below:
- Acidification Phase:
- The two mixtures of salts when placed in water promote initially the partial acidification of the medium by the formation of Carbonic Acid, which rapidly dissociated releases in the medium Ions H⁺ and CO2⁻, the latter rapidly detaches from the liquid mass, causing the effervescence aspect:
C₆H₈O₇.H₂O + 3NaHCO₃ - > 4H₂O + Na₃C₆H₅O₇ + 3CO₂ (equation 1)
C₄H₆O₆ + 2NaHCO₃ - > 2H₂O + Na₂C₄H₆O₆ + 2CO₂ (equation 2)
- Hypochlorous Acid Formation Phase:
- Another reaction occurs concurrently to that above mentioned, where Hypochlorous Acid is produced, as shown below, which will be consumed later in the formation of Chloride Dioxide:
- 6 C₃O₃N₃NaCl₂ + 2 H₂O - > C₃O₃N₃NaH₂ + 2 HClO (equation 3)
- Hypochlorous Acid Stabilization Phase
- With greater availability of ions H⁺ in the medium the reaction displaces towards the formation of Hypochlorous Acid; the Ions H⁺ present in the medium help to keep the hypochlorous acid in its non-detached form, contributing to increase overall yield of the process and maximizing the formation of Chloride Dioxide:
HCIO - > H⁺ + ClO⁻ (equation 4)
- Chloride Dioxide Formation Phase
- With the Hypochlorous Acid present in non-detached form, the reaction of chloride Dioxide formation happens spontaneously. In this reaction there is formation of Sodium Hydroxide, which will contribute for the final pH adjustment of the Chloride Dioxide solution:
2 NaClO₂ + HOCI = 2ClO₂ + NaCl + NaOH (equation 5)

3. **"FINAL PRESENTTION OPTIONS",** according to claims 1 and 2 and in a first presentation option, **characterized by** consisting of two packages, where each contains one mixture of inorganic salts (citric acid + Sodium Chlorite and tartaric acid + sodium bicarbonate), proportionally balanced, which when diluted in water together develop the reactions necessary in effervescent aspect and trigger the formation of Chloride Dioxide.

4. **"FINAL PRESENTTION OPTIONS",** according to claims 1 and 2 and in a second presentation option, ***characterized* by** both salt mixtures being pressed in tablet form, which when diluted in water together develop the reactions necessary in effervescent aspect and trigger the formation of Chloride Dioxide.
